# EUROPÄISCHE PATENTSCHRIFT

(11) **EP 1 690 781 B1**
(45) Veröffentlichungstag und Bekanntmachung des Hinweises auf die Patenterteilung: **14.01.2009**
(21) Anmeldenummer: 06002320.7
(22) Anmeldetag: 04.02.2006
(51) Int. Cl.: B62D 33/067

(54) **Fahrerhauslagerung**
Cab suspension for a lorry
Suspension de cabine de camion

(30) Priorität: 12.02.2005 DE 102005006479
(43) Veröffentlichungstag der Anmeldung: 16.08.2006
(73) Patentinhaber: MAN Nutzfahrzeuge Österreich AG, 4400 Steyr (AT)
(72) Erfinder: Wührleitner, Gerhard, Dipl.-Ing., 4400 Steyr (AT); Wunderlich, Walter, Dipl.-Ing., 4441 Behamberg (AT); Täuber, Klemens, Ing., 4400 Steyr (AT); Hahneder, Gerald, 3353 Seitenstetten (AT)

(56) Entgegenhaltungen:
- DE-A1- 10 248 653
- DE-A1- 19 637 920
- DE-A1- 19 831 327

## Beschreibung

### Technisches Gebiet:

Die Erfindung betrifft einen Mehrfunktionslagerbock sowie dessen Verwendung für eine vordere Lagerung eines kippbaren Fahrerhauses eines Lastkraftwagens, der zumindest einen Rahmenlängsträger aufweist, an dem der Mehrfunktionslagerbock befestigt ist. Der Mehrfunktionslagerbock verfügt über eine ebene Flanschplatte mit einer Anschlagfläche, die mit dem Rahmenlängsträger in Kontakt bringbar ist, und über Befestigungsstrukturen, in die Befestigungsmittel zur Befestigung der Flanschplatte am Rahmenlängsträger einführbar sind. Ferner sind an dem Mehrfunktionslagerbock Anschlusselemente vorgesehen, an denen wenigstens ein Lagerelement und/oder ein Funktionsbauteil des Nutzfahrzeugs befestigbar ist bzw. sind.

### Stand der Technik:

Auf dem Gebiet der Fahrzeugtechnik, insbesondere der Nutzfahrzeugtechnik, sind eine Vielzahl technischer Lösungen bekannt, mit denen Fahrzeugkomponenten an der Fahrzeugkarosserie bzw. am Rahmen oder den Rahmenlängsträgern befestigt werden.

In diesem Zusammenhang ist aus der DE 195 22 354 A1 eine Anordnung zur Lagerung von Fahrerhäusern bekannt, die eine am Fahrerhaus angebaute Befestigungsvorrichtung, eine am Rahmen befestigte Trägerkonsole, ein Federungsorgan sowie einen Stabilisator aufweist. Hierbei ist die Befestigungsvorrichtung als kraftübertragendes Teil zwischen einem Boden- und einem Wandteil des Fahrerhauses ausgeführt und dient gleichzeitig der Befestigung des Federungsorgans im oberen Bereich. In seinem unteren Bereich ist das Federungsorgan dagegen an der Trägerkonsole, die an der Vorderkante des Rahmens angelenkt ist, befestigt, so dass das Federungsorgan die am Fahrerhaus befestigte Befestigungsvorrichtung mit der am Rahmen befestigten Trägerkonsole verbindet. An der am Rahmen angelenkten Trägerkonsole ist zusätzlich zum unteren Teil des Federungsorgans auch der Stabilisator befestigt, durch den verschiedenartige Federungsbewegungen der Federungsorgane gedämpft werden sollen, um Nick-, Gier und Wankbewegungen des Fahrerhauses zu vermeiden.

Eine weitere Lagerung eines kippbaren Fahrerhauses wird in der DE 198 31 367 A1 beschrieben. Die in dieser Durchschrift dargelegte vordere Fahrerhauslagerung verfügt über zwei Multifunktionslagerschilde, von denen jeder am vorderen Ende eines Rahmenlängsträgers befestigt ist. Neben der Aufnahme von Komponenten der vorderen Fahrerhauslagerung dienen die Multifunktionslagerschilde auch der Befestigung weiterer Fahrzeugteile. So werden beispielsweise sowohl Feder-Dämpfer-Bein-Halter als auch Halter zur Aufnahme von Anschlägen, an denen Anschlagfüße bei vollständig gekipptem Fahrerhauses anliegen, an den Multifunktionslagerschilden befestigt. Ein weiteres Merkmal der in dieser Druckschrift beschriebenen Fahrerhauslagerung ist ihre crashoptimierte Ausführung, die durch eine "e-nergieverzehrende" Gestaltung und/oder Anordnung verschiedener Lagerteile erzielt wird. Unter anderem ist an den Multifunktionslagerschilden ein Anschlag vorgesehen, der derart angeordnet ist, dass im Crashfall ein Abriss der Lagerböcke im Bereich der vorderen Verschraubungen begünstigt wird.

Auch bei den vorbeschriebenen technischen Lösungen ergibt sich nach wie vor das Problem, dass im Bereich der vorderen Fahrerhauslagerung eine Vielzahl von Fahrzeugkomponenten vorgesehen sind, so dass der vorhandene Bauraum gering und die Montage der Komponenten oftmals schwierig ist.

Eine weitere entiokelte Lösung entsprechend dem Oberbegriff vom Anspruch 1 ist aus der DE 10248653 A1 bekannt.

Ausgehend von den aus dem Stand der Technik bekannten technischen Lösungen liegt der Erfindung daher die Aufgabe zugrunde, einen Lagerbock anzugeben, der kostengünstig und montagefreundlich ausgeführt ist und gleichzeitig eine komfortable Fahrerhauslagerung ermöglicht. Insbesondere soll durch den anzugebenden Lagerbock eine kompakte Anordnung verschiedener Fahrzeugkomponenten im Bereich der vorderen Fahrerhauslagerung ermöglicht werden.

Die Lösung der der Erfindung zugrunde liegenden Aufgabe ist im Anspruch 1 angegeben. Vorteilhafte Ausführungsformen der Erfindung sind Gegenstand der Unteransprüche und werden in der Beschreibung unter Bezugnahme auf die Figuren näher erläutert.

Gegenstand der Erfindung ist ein Mehrfunktionslagerbock zur vorderen Lagerung eines kippbaren Fahrerhauses eines Nutzfahrzeugs. Der Multifunktionslagerbock verfügt über wenigstens eine ebene Flanschplatte, die eine mit einem Rahmenlängsträger des Nutzfahrzeugs in Kontakt bringbare Anschlagfläche sowie Befestigungsstrukturen aufweist, in die Befestigungsmittel zur Befestigung der Flanschplatte an dem Rahmenlängsträger einführbar sind. Ferner verfügt der Mehrfunktionslagerbock über Anschlusselemente, an denen wenigstens ein Lagerelement und/oder wenigstens ein Funktionsbauteil des Nutzfahrzeugs befestigbar ist bzw. sind. Erfindungsgemäß zeichnet sich der vorgenannte Multifunktionslagerbock dadurch aus, dass als Anschlusselement sowohl ein Federbeinanschlusselement, eine Schwingenanschlusskonsole, ein Lenkgetriebeanschlusselement als auch ein Stoßfänger- und/oder ein Frontunterfahrschutzanschlusselement vorgesehen sind.

Hierbei ist das Federbeinanschlusselement auf einer der mit dem Rahmenlängsträger in Kontakt bringbaren Anschlagfläche der Flanschplatte gegenüberliegenden Seitenfläche mit der Flanschplatte verbunden und weist ein Verbindungselement auf, die derart ausgeführt ist, dass eine Federbeinkonsole zur Anbringung eines für eine Federung der Fahrerhauses vorgesehenen Federelements an dem Verbindungselement des Federbeinanschlusselements befestigbar ist. Weiterhin ist die Schwingenanschlusskonsole im Bereich einer im Einbauzustand des Multifunktionslagerbocks oberen Kante der Flanschplatte angeordnet und derart ausgeführt, dass eine Trageinheit, an der das kippbare Fahrerhaus zumindest abschnittsweise befestigbar ist, an der Schwingenanschlusskonsole anbringbar ist. Das erfindungsgemäß ebenfalls in den Mehrfunktionslagerbock integrierte Lenkgetriebeanschlusselement ist mit dem Federbeinanschlusselement verbunden und derart flanschplattenartig ausgebildet, dass ein Lenkgetriebe mittels Befestigungsmitteln mittelbar oder unmittelbar an dem Lenkgetriebeanschlusselement befestigbar ist. Zusätzlich zum Federbeinanschlusselement, der Schwingenanschlusskonsole und dem Lenkgetriebeanschlusselement verfügt der erfindungsgemäß ausgeführte Mehrfunktionslagerbock auch über ein Stoßfänger- und/oder ein Frontunterfahrschutzanschlusselement, das bzw. die jeweils derart ausgebildet ist/sind, dass mittels der vorgenannten Anschlusselement auch ein Stoßfänger und/oder ein Frontunterfahrschutz an dem Multifunktionslagerbock befestigbar ist. Hierbei erfolgt die Befestigung des Stoßfängers und/oder des Frontunterschutzes mittelbar oder unmittelbar an dem jeweiligen Stoßfänger- und/oder Frontunterfahrschutzanschlusselement.

Der erfindungsgemäße Mehrfunktionslagerbock zeichnet sich somit dadurch aus, dass eine Vielzahl unterschiedlicher Fahrzeugkomponenten an ihm befestigbar sind. Zusätzlich zur vorderen Fahrerhauslagerung wird auf diese Weise gleichzeitig eine vorteilhafte, vor allem platzsparende und montagefreundliche Lösung zur Befestigung einer Federbeinkonsole, einer Schwingenanschlusskonsole, eines Lenkgetriebes sowie eines Stoßfängers und/oder eines Frontunterfahrschutzes mittels nur eines Lagerbocks je Seite am Rahmenlängsträger realisiert.

In einer vorteilhaften Ausführungsform der Erfindung weist das Schwingenanschlusselement einen Einfederungsendanschlag auf, durch den Kräfte, die bei vollständig gekipptem Fahrerhaus über einen am Fahrerhaus befestigten Gummipuffer ausgeübt werden, aufgenommen werden. Der Einfederungsendanschlag ist mit einer gegenüber einer oberen Begrenzungsfläche des Schwingenanschlusselements geneigten, in Form einer Auflagerampe ausgebildeten Anschlagfläche ausgeführt.

In einer weiteren bevorzugten Ausführungsform des erfindungsgemäßen Multifunktionslagerbocks ist das Verbindungselement des Federbeinanschlusselements, die zur Befestigung einer Federbeinkonsole vorgesehen ist, an dem Federbeinanschlusselement angeschraubt.

Bevorzugterweise verfügt das Federbeinanschlusselement über einen hohlkörperförmig ausgebildeten Grundkörper, der mit der Flanschplatte verbunden ist und an dem das Verbindungselement zur Befestigung der Federbeinkonsole mittels einer Schweißverbindung befestigt ist. Genauso ist es allerdings auch denkbar, das Verbindungselement mit Hilfe einer Schraubverbindung an dem Grundkörper zu befestigen.

Eine weitere ganz spezielle Gestaltung des Mehrfunktionslagerbocks sieht vor, die Befestigung eines Stoßfängers zu realisieren, indem das Stoßfängeranschlusselement zumindest teilweise mit dem flanschplattenartig ausgebildeten Lenkgetriebeanschlusselement verbunden ist. In diesem Zusammenhang ist es ebenfalls denkbar, das Lenkgetriebe- und das Stoßfängeranschlusselement als einstückiges Bauteil auszuführen, das mit dem Federbeinanschlusselement verbunden wird bzw. in den Mehrfunktionslagerbock integriert ist.

Bei der Ausführung des erfindungsgemäßen Mehrfunktionslagerbocks sind eine Vielzahl von Herstellungsvarianten denkbar. So kann der Mehrfunktionslagerbock mit den unterschiedlichen Anschlusselementen als ein einheitliches Bauteil, beispielsweise mittels eines Gießprozesses gefertigt werden oder aber zumindest eines der Anschlusselemente wird separat gefertigt und anschließend mit der übrigen Baugruppe zu einem Mehrfunktionslagerbock verschweißt. In jedem Fall ist entscheidend, dass der Mehrfunktionslagerbock gemäß der Erfindung Anschlusselemente aufweist mittels der sowohl eine Federbeinkonsole, eine Trag-Trageinheit des Fahrerhauses wie etwa eine Schwingeneinheit, ein Lenkgetriebe als auch ein Stoßfänger und/oder ein Frontunterfahrschutz an dem Mehrfunktionslagerbock und somit über den Mehrfunktionslagerbock am Rahmenlängsträger des Kraftfahrzeugs befestigbar sind.

Vorteilhafterweise ist das Stoßfängeranschlusselement zusätzlich zum Frontunterfahrschutzanschlusselement vorgesehen, so dass eine möglichst hohe Integrationsdichte des Mehrfunktionslagerbocks erreicht wird.

Ein weiterer Aspekt der Erfindung beruht auf der Verwendung des im vorigen beschriebenen Mehrfunktionslagerbocks. So erfolgt die erfindungsgemäße Verwendung des beschriebenen Mehrfunktionslagerbocks für einen vordere Lagerung eines kippbaren Fahrerhauses eines Lastkraftwagens, der zumindest einen Rahmenlängsträger aufweist, an dem der Mehrfunktionslagerbock befestigt ist, und zeichnet sich dadurch aus, dass ein Feder-Dämpfer-Bein, ein Lenkgetriebe, eine Befestigungseinheit für das kippbare Fahrerhaus ein Frontunterfahrschutz und/oder ein Stoßfänger unmittelbar oder mittelbar am Mehrfunktionslagerbock befestigt sind.

Im Folgenden wird die Erfindung anhand von Ausführungsbeispielen unter Bezugnahme auf die Zeichnungen ohne Beschränkung des allgemeinen Erfindungsgedankens näher erläutert. Es zeigen:
- Fig. 1:: Fahrerseitig angeordneter Mehrfunktionslagerbock
a) mit Anschlussplatte zur Befestigung der Federbeinkonsole
b) ohne Anschlussplatte zur Befestigung der Federbeinkonsole
- Fig. 2:: Beifahrerseitig angeordneter Mehrfunktionslagerbock
- Fig. 3:: Frontansicht der vorderen Fahrerhauslagerung
- Fig. 4:: Schwinge
- Fig. 5:: vordere Fahrerhauslagerung mit angebautem Frontunterfahrschutz

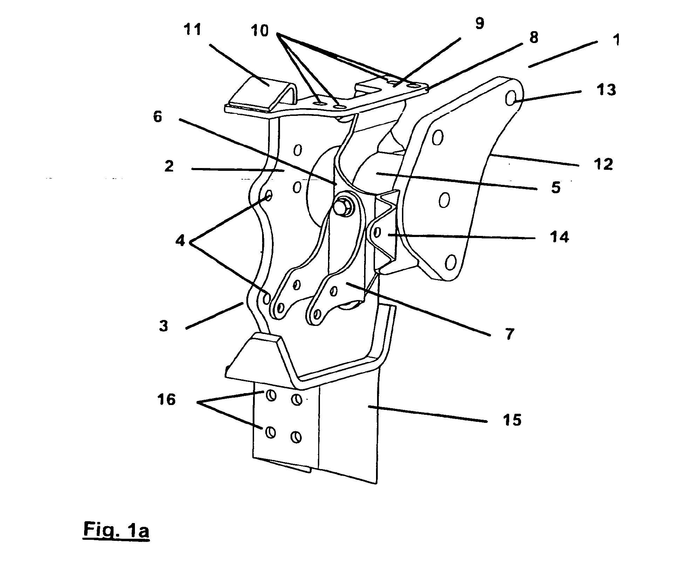

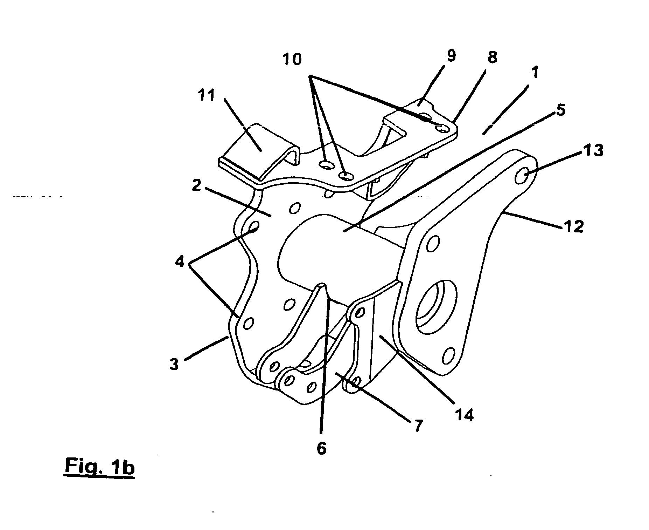

In Figur 1a ist ein fahrerseitig angeordneter Mehrfunktionslagerbock 1 dargestellt. Der Mehrfunktionslagerbock verfügt über eine Flanschplatte 2 mit einer ebenen Anschlagfläche 3. Die ebene Anschlagfläche 3 ist derart mit einem Rahmenlängsträger eines Nutzfahrzeugs (nicht dargestellt) in Kontakt bringbar, dass der Mehrfunktionslagerbock 1 über die in Form von Durchgangsbohrungen ausgebildeten Befestigungsstrukturen 4 mit dem Rahmenlängsträger verschraubbar ist. Weiterhin verfügt der in Figur 1 a dargestellte Mehrfunktionslagerbock 1 über mehrere Anschlusselemente, an denen Lagerelemente und/oder Funktionsbauteile des Nutzfahrzeugs befestigbar sind und die im Folgenden einzeln erläutert werden.

Auf der der ebenen Anschlagfläche 3 der Flanschplatte 2 gegenüberliegenden Seitenfläche ist ein Federbeinanschlusselement 5 mit der Flanschplatte 3 verbunden. Das Federbeinanschlusselement 5 weist ein als Anschlussplatte ausgeführtes Verbindungselement 6 auf, an dem mit Hilfe von Schraubverbindungen eine Federbeinkonsole 7 zur Anbringung eines für eine Federung des Fahrerhauses vorgesehenen Federelements angeschraubt ist. Wie in Figur 1b allerdings beispielhaft dargestellt ist, ist es nicht zwingend erforderlich, das Verbindungselement als plattenförmiges Bauteil auszuführen. So ist bei dem in Figur 1b dargestellten Multifunktionslagerbock 1 das Verbindungselement als Schweißverbindung ausgeführt, mittels der die Federbeinkonsole 7 mit dem Federbeinanschlusselement 5 verbunden ist.

Weiterhin ist im Bereich einer oberen Kante der Flanschplatte 2 eine Schwingenanschlusskonsole 8 angeordnet, an der eine Trageinheit zur zumindest abschnittsweisen Befestigung des Fahrerhauses anbringbar ist. Die Schwingenanschlusskonsole 8 verfügt über eine ebene obere Begrenzungsfläche 9, in die Bohrungen 10 zur Befestigung einer Schwinge des Fahrerhauses eingebracht sind. Im vorderen Bereich der Schwingenanschlusskonsole 8 ist ein Einfederungsendanschlag 11 vorgesehen. Der Einfederungsendanschlag 11 ist in Form einer Auflagerampe ausgeführt und stellt sicher, dass das Fahrerhaus während des Kippens nicht über einen bestimmten Punkt gekippt werden kann. Wird das Fahrerhaus maximal nach vorne gekippt, so liegt ein am Fahrerhaus befestigter Gummipuffer an dem Einfederungsendanschlag 11 auf, so dass der Einfederungsendanschlag 11 die vom Gummipuffer übertragenen Kräfte aufnimmt.

Ferner ist an dem der Flanschplatte 2 gegenüberliegenden Ende des Federbeinanschlusselements 5 ein Lenkgetriebeanschlusselement 12 mit dem Federbeinanschlusselement 5 verbunden. Das Lenkgetriebeanschlusselement 12 ist flanschplattenartig ausgebildet und im Wesentlichen planparallel zur Flanschplatte 2 ausgerichtet. Auch das Lenkgetriebeanschlusselement 12 verfügt über als Bohrungen ausgebildete Befestigungsstrukturen 13, an denen ein Lenkgetriebe anschraubbar ist. Darüber hinaus ist an dem Lenkgetriebe- und dem Federbeinanschlusselement ein Stoßfängeranschiusselement 14 vorgesehen, an dem seitlich ein Stoßfänger mittelbar oder unmittelbar befestigbar ist. Neben der Befestigung am Stoßfängeranschlusselement 14 wird der Stoßfänger in diesen Fall zusätzlich an dem Verbindungselement 6 des Federbeinanschlusselements 5 angeschraubt.

Weiterhin ist an der unteren Kante der Flanschplatte 2 ein Frontunterfahrschutzanschlusselement 15 vorgesehen, an dem ein Frontunterfahrschutz anbringbar ist. Das Frontunterfahrschutzanschlusselement 15 verfügt über eine nahezu senkrecht zur Flanschplatte 2 verlaufende Konsole sowie vertikal verlaufende Anschlussstrukturen, die jeweils Bohrungen 16 aufweisen, so dass der Frontunterfahrschutz mit dem Mehrfunktionslagerbock verschraubbar ist.

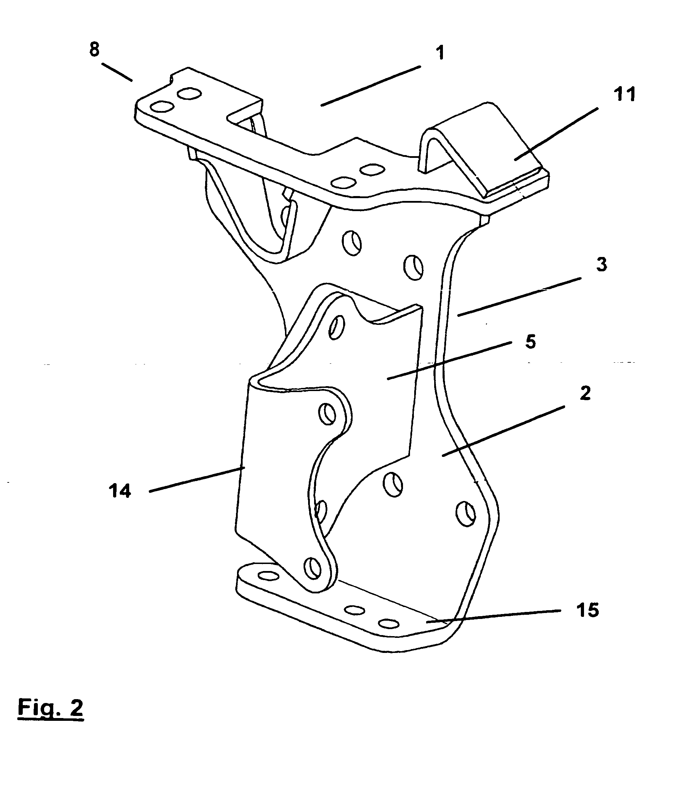

In der Figur 2 ist ein beifahrerseitig angeordneter Mehriunktionslagerbock 1 dargestellt, der im Wesentlichen spiegelsymmetrisch zu dem in Figur 1 abgebildeten Lagerbock ausgeführt ist. Da sich dieser Lagerbock auf der Beifahrerseite des Fahrerhauses befindet, ist kein Lenkgetriebeanschlusselement vorgesehen. Selbstverständlich ist es aber auch denkbar, ein Fahrzeug, bei dem die Lenkung auf der rechten Fahrzeugseite angeordnet ist, mit einem vollkommen spiegelsymmetrisch ausgebildeten Mehrfunktionslagerbock, also auch mit Lenkgetriebeanschlusselement, auszurüsten. Der in Figur 2 abgebildete Mehrfunktionslagerbock 1 verfügt nicht über ein Lenkgetriebeanschlusselement, sondern eine Schwingenanschlusskonsole 8, ein Federbeinanschlusselement 5, sowie ein Stoßfänger- 14 und ein Frontunterfahrschutzanschlusselement 15. Weiterhin ist auch in diesem Fall eine Flanschplatte 2 mit einer ebenen Anschlagfläche 3 vorgesehen, über die der Mehrfunktionslagerbock 1 an einem Rahmenlängsträger eines Nutzfahrzeugs befestigbar ist.

Die Schwingenanschlusskonsole 8 weist darüber hinaus ebenfalls einen Einfederungsendanschlag 11 auf, der die gleiche, wie bei Figur 1 bereits beschriebene Funktion übernimmt. Das Frontunterfahrschutzanschlusselement 15 ist bei der in Figur 2 dargestellten technischen Lösung im unteren Teil der Flanschplatte 2 als senkrecht zur Flanschplatte 2 angeordnete Konsole ausgeführt. Die Befestigung der unterschiedlichen Komponenten erfolgt mit Hilfe von Schraubverbindungen.

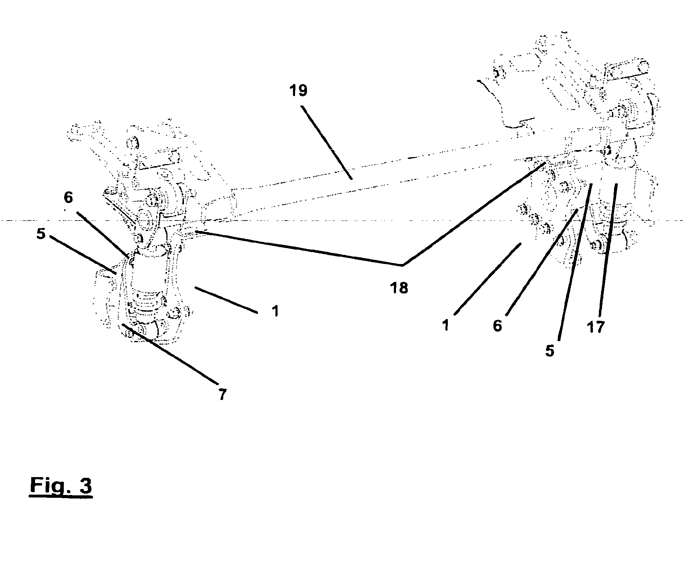

Die Figur 3 zeigt in einer Frontansicht die vordere Fahrerhauslagerung eines Lastkraftwagens mit kippbarem Fahrerhaus. Zu sehen sind die fahrer- bzw. beifahrerseitig angeordneten Mehrfunktionslagerböcke 1 sowie einige der an ihnen befestigten Fahrzeugkomponenten. An dem Federbeinanschlusselement 5 ist jeweils über die entsprechendes Verbindungselement 6 eine Federbeinkonsole 7 befestigt. Die Federbeinkonsole 7 dient der Aufnahme und Lagerung eines Feder-Dämpfer-Beins 17 im unteren Bereich. An der Schwingenanschlusskonsole 8 sind jeweils die Schwingen 18, an denen das Fahrerhaus des Lastkraftwagens befestigbar ist, angeschraubt. Verbunden werden die vorderen Fahrerhauslagerungen mittels einer U- förmigen Stabilisatiorschwinge 19. Durch die Stabilisatiorschwinge werden verschiedenartige Federungsbewegungen der Federungsorgane gedämpft, um Nick-, Gier-, und Wankbewegungen des Fahrerhauses zu vermeiden.

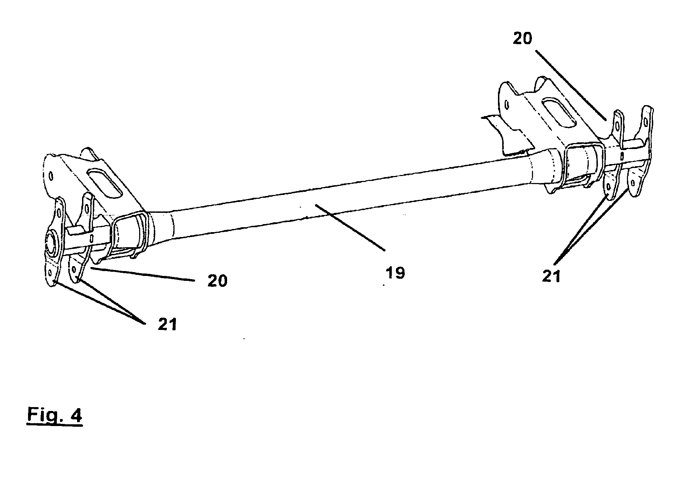

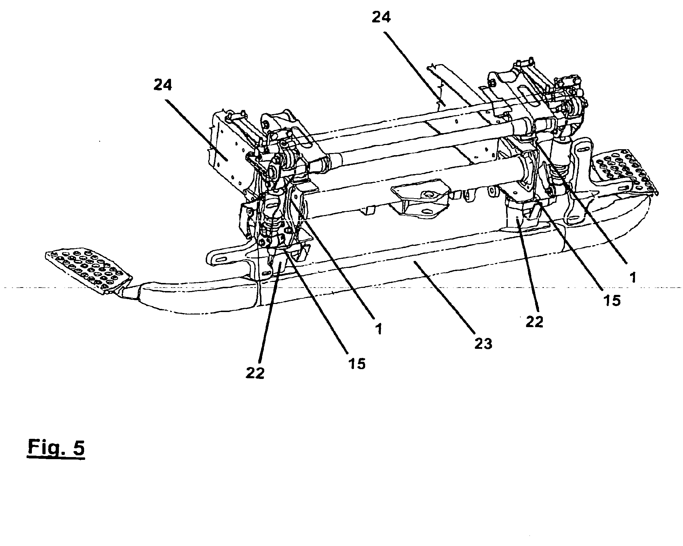

Figur 4 zeigt die U- förmig ausgebildete Stabilisatiorschwinge 19, die sich durch seitlich auskragende Tragarme 20 mit angeschweißten Laschen 21 auszeichnet. Über die angeschweißten Laschen erfolgt, wie in Figur 5 deutlich zu erkennen ist, die Befestigung der Feder-Dämpfer-Beine 17 im oberen Bereich.

In Figur 5 ist ebenfalls die vordere Lagerung eines kippbaren Fahrerhauses eines Lastkraftwagens mit den fahrer- und beifahrerseitig angeordneten Mehrfunktionslagerböcken 1 dargestellt. Die beiden Multifunktionslagerböcke sind jeweils an den Rahmenlängsträgern 24 befestigt, wobei die Anschlagfläche 3 der Flanschplatten 2 an den Außenflächen der Rahmenlängsträger 24 anliegen und die Multifunktionslagerböcke 1 über Schraubverbindungen mit den Rahmenlängsträgern verbunden sind. Alternativ oder ergänzend können die Multifunktionslagerböcke 1 auch mit Hilfe von entsprechend dimensionierter Nietverbindungen an den Rahmenlängsträgern befestigt werden. Zusätzlich zu den bereits in Figur 3 abgebildeten Fahrzeugkomponenten sind an dem Frontunterfahrschutzanschlusselement 15 zusätzliche Halter 22 angeschraubt, so dass der Frontunterfahrschutz 23 mittelbar mit den Mehrfunktionslagerböcken verbunden ist.

### Bezugszeichenliste

- 1: Mehrfunktionslagerbock
- 2: Flanschplatte
- 3: Anschlagfläche
- 4: Befestigungsstrukturen
- 5: Federbeinanschlusselement
- 6: Fügeelement
- 7: Federbeinkonsole
- 8: Schwingenanschlusskonsole
- 9: Begrenzungsfläche
- 10: Bohrlöcher
- 11: Einfederungsendanschlag
- 12: Lenkgetriebeanschlusselement
- 13: Befestigungsstrukturen
- 14: Stoßfängeranschlusselement
- 15: Frontunterfahrschutzanschlusselement
- 16: Befestigungsstruktur
- 17: Feder-Dämpfer-Bein
- 18: Schwinge
- 19: Stabilisatorschwinge
- 20: Tragarm
- 21: Lasche
- 22: Halter
- 23: Frontunterfahrschutz
- 24: Rahmenlängsträger

## Patentansprüche

1. Mehrfunktionslagerbock (1) zur vorderen Lagerung eines kippbaren Fahrerhauses eines Nutzfahrzeugs, der über wenigstens eine ebene Flanschplatte (12) verfügt, die eine mit einem Rahmenlängsträper (24) des Nutzfahrzeugs in Kontakt bringbare Anschlagfläche (13) sowie Befestigungsstrukturen (4) aufweist, in die Befestigungsmittel zur Befestigung der Flanschplatte (12) an dem Rahmenlängsträger (24) einführbar sind, und der über Anschlusselemente verfügt, an denen wenigstens ein Lagerelement und/oder wenigstens ein Funktionsbauteil des Nutzfahrzeugs befestigbar sind, wobei als Anschlusselement
- ein Federbeinanschlusselement (5), das auf einer der Anschlagfläche des Platten-elements gegenüberliegenden Seitenfläche mit der Flanschplatte verbunden ist und das zumindest ein Verbindungsement (6) aufweist, das derart ausgeführt ist, dass eine Federbeinkonsole (7) zur Anbringung eines für eine Federung des Fahrerhauses vorgesehenen Federelements an dem Verbindungselement des Federbeinanschlusselements befestigbar ist,
- ein Schwingenanschlusskonsole (8) im Bereich einer im Einbauzustand des Mehrfunktionslagerbocks (1) oberen Kante der Flanschplatte (12) angeordnet ist, die derart ausgeführt ist, dass eine Trageinheit, an der das kippbare Fahrerhaus zumindest abschnittsweise befestigbar ist, an der Schwingenanschlusskonsole anbringbar ist und ein
- ein Stossfänger- und/oder ein Frontunterfahrschutzanschlusselement (14;15), die jeweils derart ausgebildet sind, dass an dem Stossfänger- und/oder an dem Unterfahrschutzanschlusselement (14;15) ein Stossfänger und/oder ein Frontunterfahrschutz mittelbar oder unmittelbar befestigbar sind, vorgesehen sind,
**dadurch gekennzeichnet, dass** als weiteres Anschlusselement
- ein Lenkgetriebeanschlusselement (12), das mit dem Federbeinanschlusselement verbunden ist und derart flanschplattenartig ausgebildet ist, dass ein Lenkgetrie-be mittels Befestigungsmitteln an dem Lenkgetriebeanschlusselement (12) mitelbar oder unmittelbar befestigbar ist, vorgesehen ist.

2. Mehrfunktionslagerbock nach Anspruch 1,
**dadurch gekennzeichnet, dass** das Schwingenanschlusskonsole (8) einen Einfederungsendanschlag (11) aufweist, der eine gegenüber einer oberen Begrenzungsfläche der Schwingenanschluss²²konsole (8) geneigte, in Form einer Auflagerampe ausgebildete Anschlagsfläche auf-weist und durch den von einem Gummipuffer in einem eingefederten Zustand des Fahrerhauses ausgeübte Kräfte aufnehmbar sind.

3. Mehrfunktionslagerbock nach Anspruch 1 oder 2,
**dadurch gekennzeichnet, dass** die zumindest ein Verbindungselement des Federbeinanschlusselements (5) mittels Schraubverbindungen an dem Federbeinanschlusselement (5) befestigt ist.

4. Mehrfunktionslagerbock nach einem der Ansprüche 1 oder 2,
**dadurch gekennzeichnet, dass** das Federbeinanschlusselement (5) einen hohlkörperförmig ausgebildeten Grundkörper aufweist, der mit der Flanschplatte (2) verbunden ist und an dem das Verbindungselement mittels einer Schweiß- und/oder einer Schraubverbindung befestigt ist.

5. Mehrfunktionslagerbock nach einem der Ansprüche 1 bis 4,
**dadurch gekennzeichnet, dass** das Stossfängeranschlusselement (14) zumindest teilweise mit dem flanschplattenartig ausgebildeten Lenkgetriebeanschlusselement (12) verbunden ist.

6. Mehrfunktionslagerbock nach einem der Ansprüche 1 bis 5,
**dadurch gekennzeichnet, dass** der Mehrfunktionslagerbock (1) mittels wenigstens eines Giessprozesses hergestellt wird.

7. Mehrfunktionslagerbock nach einem der Ansprüche 1 bis 6,
**dadurch gekennzeichnet, dass** die Flanschplatte (2), das Federbeinanschlusselement (5), die Schwingenanschlusskonsole (8) das Lenkgetriebeanschlusselement (12) und das Stossfänger-und/oder Unterfahrschutzanschlusselement (14;15) zumindest teilweise miteinander verschweisst sind.

## Claims

1. Multi-functional bearing block (1) for the front bearing of a tilting driver's cab of a commercial vehicle, possessing at least one flat flange plate (2) having a striker face (3) that can be brought into contact with a longitudinal chassis member (24) of the commercial vehicle together with mounting structures (4) into which means of securing can be inserted to secure the flange plate (2) to the longitudinal chassis member (24), and which possesses attachment elements onto which at least one bearing element and/or at least one functional component of the commercial vehicle can be fastened, whereby
- a telescopic sprung strut attachment element (5) that is attached to the flange plate on a side face opposite to the striker face of the plate element and has at least one connection element (6) constructed in such a way that a telescopic sprung strut bracket (7) to attach a sprung element provided for the sprung suspension of the driver's cab is attachable to the connection element of the telescopic sprung strut,
- a pivoted connection bracket (8) is arranged in the region of an edge of the flange plate (2) that is at the top when the multi-functional bearing block (1) is in the installed state and is constructed in such a way that a support unit to which the tilting driver's cab is attachable at least segmentally is attachable to the pivoted connection bracket, and a
- a bumper attachment element and/or a front under-run protection attachment element (14; 15), each constructed in such a way that a bumper and/or a front under-run protection are indirectly or directly attachable to the bumper attachment element and/or to the under-run protection attachment element (14; 15)
are provided as the connecting element,
**characterised in that**
- a steering gear mounting element (12) attached to the telescopic sprung strut attachment element and constructed like a flanged plate in such a way that a steering gear is indirectly or directly attachable to the steering gear mounting element (12) by means of fixings
is provided as an additional connection element.

2. Multi-functional bearing block according to Claim 1, **characterised in that** the pivoted connection bracket (8) has a springing-in end stop (11) having an end-stop surface shaped as a support surface ramp and inclined towards an upper limiting surface of the pivoted connection bracket (8) and through which forces exerted are absorbable by a rubber buffer when the driver's cab is in the sprung-in state.

3. Multi-functional bearing block according to Claim 1 or 2, **characterised in that** at least one connection element of the telescopic sprung strut attachment element (5) is fastened to the telescopic sprung strut attachment element (5) by means of screwed connectors.

4. Multi-functional bearing block according to one of the Claims 1 or 2, **characterised in that** the telescopic sprung strut attachment element (5) has a base body shaped like a hollow body which is attached to the flange plate (2) and to which the connecting element is fastened by means of a welded and/or bolted connection.

5. Multi-functional bearing block according to one of the Claims 1 to 4, **characterised in that** the bumper attachment element (14) is at least partly connected to the flange plate shaped steering gear mounting element (12).

6. Multi-functional bearing block according to one of the Claims 1 to 5, **characterised in that** the multi-functional bearing block (1) is manufactured by at least one casting process.

7. Multi-functional bearing block according to one of the Claims 1 to 6, **characterised in that** the flange plate (2), the telescopic sprung strut attachment element (5), the pivoted connection bracket (8), the steering gear mounting element (12) and the bumper-and/or under-run protection attachment element (14; 15) are at least partly welded to one another.

## Revendications

1. Support de fixation multifonctions (1) pour permettre la fixation avant d'une cabine basculante d'un véhicule industriel, qui dispose au moins d'une plaque de bridage plate (2) qui présente une surface de butée (3) à mettre en contact avec un longeron de cadre (24) du véhicule industriel ainsi que des structures de fixation dans lesquelles sont insérables des moyens de fixation pour fixer la plaque de bridage (2) sur le longeron de cadre (24), et qui dispose d'éléments de raccordement sur lesquels peuvent être fixés au moins un élément de fixation et/ou au moins une pièce de fonction du véhicule industriel, auquel cas sont prévus à titre d'élément d'assemblage,
- un élément d'assemblage pour jambe de suspension (5) qui est relié à la plaque de bridage sur une surface latérale opposée à la surface de butée de l'élément à plaque et présente au moins un élément d'assemblage (6) conçu de telle manière qu'un support pour jambe de suspension (7) puisse être fixé sur l'élément de liaison de l'élément d'assemblage pour jambe de suspension pour monter un élément de suspension prévu pour amortir la cabine,
- un support d'assemblage pour bras oscillant (8) qui est disposé dans la zone d'un bord supérieur en état monté du support de fixation multifonctions (1) de la plaque de bridage (2) qui est conçue de telle manière qu'une unité porteuse, sur laquelle peut être fixé au moins par section la cabine basculante, peut être montée sur le support d'assemblage pour bras oscillant (8), et
- un élément d'assemblage pour pare-chocs et/ou un élément d'assemblage pour protection anti-encastrement avant (14 ; 15), qui sont formés de telle manière qu'un pare-chocs et/ou une barre anti-encastrement avant puissent être fixés directement ou indirectement sur l'élément d'assemblage pour pare-chocs et/ou sur l'élément d'assemblage pour protection anti-encastrement avant,
**caractérisé en ce qu'**est prévu comme élément d'assemblage supplémentaire
- un élément d'assemblage pour boîtier de direction (12) qui est relié à l'élément d'assemblage pour jambe de suspension et est conçu en forme de plaque de bridage de telle manière qu'un boîtier de direction puisse être fixé directement ou indirectement sur l'élément d'assemblage pour boîtier de direction à l'aide de moyens de fixation.

2. Support de fixation multifonctions selon la revendication 1,
**caractérisé en ce que** le support d'assemblage pour bras oscillant (8) présente une butée finale de suspension qui présente une surface de butée conçue en forme de rampe de fixation, inclinée par rapport à une surface de délimitation supérieure du support d'assemblage pour bras oscillant (8) et par lequel des forces exercée dans un état amorti de la cabine peuvent être absorbées par un tampon en caoutchouc.

3. Support de fixation multifonctions selon la revendication 1 ou 2,
**caractérisé en ce qu'**au moins un élément de liaison de l'élément d'assemblage pour jambe de suspension (5) est fixé sur l'élément d'assemblage pour jambe de suspension (5) au moyen de liaisons boulonnées.

4. Support de fixation multifonctions selon l'une des revendications 1 ou 2,
**caractérisé en ce que** l'élément d'assemblage pour jambe de suspension (5) présente un corps de base en forme de corps creux, qui est relié à la plaque de bridage et sur lequel est fixé l'élément de liaison au moyen d'une liaison soudée et/ou boulonnée.

5. Support de fixation multifonctions selon l'une des revendications 1 à 4,
**caractérisé en ce que** l'élément d'assemblage pour pare-chocs (14) est relié au moins en partie à l'élément d'assemblage pour boîtier de direction (12) formé comme plaque de bridage.

6. Support de fixation multifonctions selon l'une des revendications 1 à 5,
**caractérisé en ce que** le support de fixation multifonctions (1) est fabriqué au moyen au moins d'un procédé de coulée.

7. Support de fixation multifonctions selon l'une des revendications 1 à 6,
**caractérisé en ce que** la plaque de bridage (2), l'élément d'assemblage pour jambe de suspension (5), le support d'assemblage pour bras oscillant (8), l'élément d'assemblage pour boîtier de direction (12) et l'élément d'assemblage pour pare-chocs et/ou pour protection anti-encastrement (14 ; 15) sont soudés au moins en partie entre eux.
